# EUROPÄISCHE PATENTANMELDUNG

(11) **EP 4 169 762 A1**
(43) Veröffentlichungstag der Anmeldung: **26.04.2023**
(21) Anmeldenummer: 22201280.9
(22) Anmeldetag: 13.10.2022
(51) Int. Cl.: B60L 53/16, B60R 3/02, B62D 25/24

(54) **VORRICHTUNG ZUM LADEN EINES KRAFTFAHRZEUGS**

(30) Priorität: 25.10.2021 DE 102021127613
(71) Anmelder: MAN Truck & Bus SE, 80995 München (DE)
(72) Erfinder: Schmitz, Andreas, 80995 München (DE)
(74) Vertreter: v. Bezold & Partner Patentanwälte - PartG mbB

(57) **Zusammenfassung**

Die Erfindung betrifft eine Vorrichtung zum Laden eines Kraftfahrzeugs (10), vorzugsweise eines Nutzfahrzeugs. Die Vorrichtung weist eine Ladesteckdose (14) zum Anschließen eines elektrischen Ladekabels und eine bewegbare Trittstufe (16) zum Besteigen des Kraftfahrzeugs (10) auf. Die Trittstufe (16) ist als eine bewegbare Abdeckung der Ladesteckdose (14) angeordnet. Vorteilhaft kann die Anordnung der Ladesteckdose (14) damit besonders bauraumgünstig und geschützt sein.

## Beschreibung

Die Erfindung betrifft eine Vorrichtung zum Laden eines Kraftfahrzeugs und ein Kraftfahrzeug mit einer Vorrichtung zum Laden des Kraftfahrzeugs.

Der Übergang von verbrennungsmotorisch angetriebenen Lastkraftwagen zu elektromotorisch angetriebenen Lastkraftwagen stellt die Hersteller vor vielfältige Herausforderungen. Ein besonderes Problem besteht in den hohen Stückkosten für die derzeit nur in sehr geringen Stückzahlen nachgefragten und hergestellten elektrisch angetriebenen Lastkraftwagen gegenüber den noch immer in sehr großen Mengen nachgefragten und hergestellten verbrennungsmotorisch angetriebenen Lastkraftwagen. Ein weiterer Problemkreis besteht in den hohen Entwicklungskosten für neue Lastkraftwagenteile und die Modifikation bestehender Lastkraftwagenteile zum Anpassen an Anforderungen der elektrisch angetriebenen Lastkraftwagen. Ein weiterer anderer Problemkreis besteht darin, dass in elektrisch angetriebenen Lastkraftwagen häufig Bauraumknappheit herrscht, da viele elektrische Komponenten, insbesondere des Hochvolt-Systems, vergleichsweise viel bzw. zusätzlichen Bauraum benötigen (z. B. Traktionsbatterie(n), Elektromotor(en), Bordladegerät, Ladesteckdose).

Beispielsweise offenbart die EP 2 777 968 B1 ein Kraftfahrzeug mit einer Speichereinrichtung zur Speicherung elektrischer Energie für eine Elektromaschine des Kraftfahrzeugs. Eine Ladeeinrichtung weist ein Ladeinterface zum Anschließen eines Ladeteils zum externen Aufladen der Speichereinrichtung auf. Das Ladeinterface ist in Querrichtung des Kraftfahrzeugs hinter einem Seitenkarosserieabschnitt angeordnet.

Der Erfindung liegt die Aufgabe zu Grunde, eine verbesserte Anordnung einer Ladesteckdose für ein Kraftfahrzeug zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt betrifft eine Vorrichtung zum Laden eines Kraftfahrzeugs, vorzugsweise eines Nutzfahrzeugs (z. B. Lastkraftwagens). Die Vorrichtung weist eine Ladesteckdose zum Anschließen eines elektrischen Ladekabels auf (z. B. zum Aufladen einer Traktionsbatterie). Die Vorrichtung weist eine bewegbare Trittstufe zum Besteigen des Kraftfahrzeugs auf, wobei die Trittstufe als eine bewegbare Abdeckung der Ladesteckdose angeordnet ist.

Vorteilhaft ermöglicht die Vorrichtung eine besonders bauraumgünstige und geschützte Anordnung der Ladesteckdose. Die Anordnung kann besonders bauraumgünstig sein, da kein zusätzlicher Bauraum für die Ladesteckdose geschaffen werden muss. Stattdessen wird ungenutzter Bauraum hinter einer Trittstufe des Kraftfahrzeugs genutzt. Die Anordnung kann besonders geschützt sein, da die vergleichsweise stabile Trittstufe als schützende Abdeckung für die Ladesteckdose besonders geeignet ist.

In einer Weiterbildung kann die Ladesteckdose noch einen eigenen Deckel oder Stöpsel zum Abdecken der elektrischen Verbinder der Ladesteckdose aufweisen, vorzugsweise als Wassereindringschutz.

In einem Ausführungsbeispiel ist die Trittstufe zwischen einer, vorzugsweise horizontal ausgerichteten, Gebrauchsstellung (bzw. Öffnungsstellung) und einer, vorzugsweise vertikal ausgerichteten, Nichtgebrauchsstellung (bzw. Schließstellung) bewegbar. Vorzugsweise kann die die Trittstufe in der Nichtgebrauchsstellung die Ladesteckdose abdecken, und/oder die Trittstufe kann in der Gebrauchsstellung einen Zugang zu der Ladesteckdose zum Anschließen des elektrischen Ladekabels freigeben.

In einem weiteren Ausführungsbeispiel ist die Trittstufe (z. B. nach unten) klappbar.

In einem weiteren Ausführungsbeispiel deckt die Trittstufe in einem eingeklappten Zustand die Ladesteckdose ab. Alternativ oder zusätzlich kann die Trittstufe in einem ausgeklappten Zustand einen Zugang zu der Ladesteckdose zum Anschließen des elektrischen Ladekabels freigeben, vorzugsweise in einem Bereich oberhalb der ausgeklappten Trittstufe.

In einer Ausführungsform ist die Trittstufe (z. B. mittels eines Schlosses) abschließbar, vorzugsweise in einer Nichtgebrauchsstellung der Trittstufe. Vorteilhaft kann somit ein unbefugter Zugriff auf die Ladesteckdose verhindert und/oder ein unerlaubtes Besteigen des Kraftfahrzeugs zumindest erschwert werden.

In einer weiteren Ausführungsform weist die Trittstufe in einer Gebrauchsstellung der Trittstufe eine Längsachse und eine Querachse auf. In einer Variante ist die Ladesteckdose parallel zu der Querachse ausgerichtet. Alternativ kann die Ladesteckdose angeschrägt zu der Querachse und angeschrägt zu der Längsachse ausgerichtet sein. Damit kann auf vorteilhafte Weise unterschiedlichen Bauraumerfordernisse genügt werden.

In einer Ausführungsvariante weist die Vorrichtung ferner mindestens eine Komponente von einer Ladekontrollanzeige, einen Stromtrennschalter und einen Ladesteckdose-Verriegelungsschalter auf.

In einer weiteren Ausführungsvariante ist die bewegbare Trittstufe als eine bewegbare Abdeckung der mindestens einen Komponente angeordnet. Alternativ kann die Vorrichtung beispielsweise eine weitere bewegbare Trittstufe aufweisen (z. B. oberhalb oder unterhalb der bewegbaren Trittstufe), und die weitere bewegbare Trittstufe kann als eine bewegbare Abdeckung der mindestens einen Komponente angeordnet sein. Vorteilhaft kann somit ebenfalls eine bauraumgünstige und geschützte Anordnung der mindestens einen Komponente erreicht werden.

In einem Ausführungsbeispiel weist die Vorrichtung ferner eine Seitenverkleidung, vorzugsweise eine Seitenvollverkleidung, auf, die einen Ausschnitt (z. B. eine Durchgangsöffnung) aufweist, in dem oder an dem die Trittstufe und die Ladesteckdose angeordnet sind. Vorteilhaft können die Ladesteckdose und die Trittstufe somit in einer Seitenverkleidung integriert werden.

In einem Ausführungsbeispiel weist die Vorrichtung ferner eine Traktionsbatterie auf, wobei die Traktionsbatterie neben der Ladesteckdose und/oder in einer Blickrichtung auf eine Außenseite der Seitenverkleidung, vorzugsweise geschützt und/oder verdeckt, hinter der Seitenverkleidung angeordnet ist. Vorteilhaft kann somit eine räumliche Nähe zwischen der Ladesteckdose und der Traktionsbatterie geschaffen werden, sodass beispielsweise elektrische Verbindungsleitungslängen kurzgehalten werden können.

In einem Ausführungsbeispiel weist die Vorrichtung ferner eine Trägerplatte (z. B. ein Trägerblech) auf, die zwischen der Traktionsbatterie und der Seitenverkleidung angeordnet ist. Vorzugsweise kann die Trittstufe bewegbar, vorzugsweise klappbar, an der Trägerplatte angebracht sein.

In einem weiteren Ausführungsbeispiel weist die Vorrichtung ferner eine Crashstruktur (z. B. Crashbeplankung) auf, die dazu ausgebildet ist, sich bei einem Aufprall unter Energieabbau vorbestimmt zu verformen. Die Trittstufe und die Ladesteckdose können vorzugsweise in oder an einem Ausschnitt der Crashstruktur angeordnet sein. Vorteilhaft können die Ladesteckdose und die Trittstufe somit in einer Crashstruktur integriert werden.

In einer Weiterbildung kann die Crashstruktur im Wesentlichen plattenförmig sein und/oder horizontal ausgerichtet sein und/oder beispielsweise zwischen der Seitenverkleidung und der Traktionsbatterie angeordnet sein.

Ein weiterer Aspekt betrifft ein Kraftfahrzeug, vorzugsweise Nutzfahrzeug, bevorzugt Lastkraftwagen, wobei das Kraftfahrzeug eine Vorrichtung zum Laden wie hierin offenbart aufweist.

In einem Ausführungsbeispiel weist das Kraftfahrzeug ferner eine Vorderachse und eine Hinterachse auf. Die Trittstufe und die Ladesteckdose können an einer Längsaußenseite des Kraftfahrzeugs und/oder zwischen der Vorderachse und der Hinterachse angeordnet sein, vorzugsweise auf einer Höhe mit der Vorderachse und der Hinterachse.

In einem Ausführungsbeispiel weist das Kraftfahrzeug ferner eine Arbeitsplattform auf, wobei die Trittstufe zum Besteigen der Arbeitsplattform angeordnet ist. Vorzugsweise kann die Arbeitsplattform bezüglich einer Vorwärtsfahrtrichtung des Kraftfahrzeugs hinter einem Fahrerhaus des Kraftfahrzeugs angeordnet sein, und/oder die Arbeitsplattform kann oberhalb von einem Fahrzeugrahmen des Kraftfahrzeugs angeordnet sein, und/oder mittels der Arbeitsplattform kann mindestens ein fahrerhausrückseitiger Anschluss des Kraftfahrzeugs und/oder mindestens ein frontseitiger Anschluss eines Anhängers oder Aufliegers des Kraftfahrzeugs zugänglich sein.

Es ist auch möglich, die Vorrichtung wie hierin offenbart beispielsweise für Personenkraftwagen, geländegängige Fahrzeuge, Baumaschinen oder Landmaschinen zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Rückansicht eines Kraftfahrzeugs gemäß einem Ausführungsbeispiel der vorliegenden Offenbarung;
- Figur 2: eine perspektivische Ansicht eines Abschnitts einer Längsaußenseite eines Kraftfahrzeugs;
- Figur 3: eine perspektivische Ansicht eines Abschnitts einer Längsaußenseite eines Kraftfahrzeugs;
- Figur 4: eine perspektivische Ansicht eines Abschnitts einer Längsaußenseite eines Kraftfahrzeugs; und
- Figur 5: eine perspektivische Ansicht eines Abschnitts an einer Längsaußenseite eines Kraftfahrzeugs.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

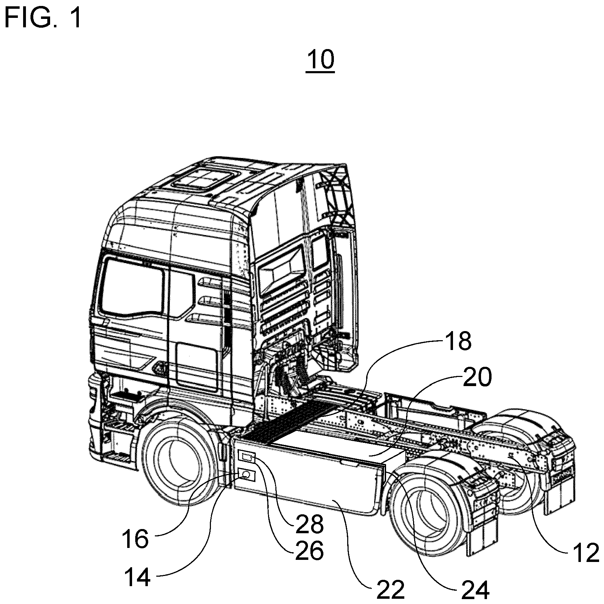

Die Figur 1 zeigt ein Kraftfahrzeug 10. Das Kraftfahrzeug 10 ist vorzugsweise als ein Lastkraftwagen ausgeführt, wie dargestellt ist. Der Lastkraftwagen kann beispielsweise einen Aufbau, z. B. Ladeaufbau, aufweisen (nicht in Figur 1 dargestellt). Alternativ kann der Lastkraftwagen beispielsweise eine Sattelkupplung zum Ankuppeln eines Sattelaufliegers aufweisen (nicht in Figur 1 dargestellt). Es ist möglich, dass das Kraftfahrzeug 10 beispielsweise als ein Omnibus, eine Baumaschine oder eine Landmaschine ausgebildet ist. Es ist auch möglich, dass das Kraftfahrzeug 10 nicht als Nutzfahrzeug ausgeführt ist, sondern beispielsweise als ein Personenkraftwagen (Pkw).

Das Kraftfahrzeug 10 kann einen Fahrzeugrahmen 12 aufweisen. Der Aufbau oder Sattelauflieger kann auf dem Fahrzeugrahmen 12 abgestützt sein. Der Fahrzeugrahmen 12 kann bevorzugt als ein Leiterrahmen ausgeführt sein, wenn das Kraftfahrzeug 10 beispielsweise als ein Lastkraftwagen ausgeführt ist. Der Leiterrahmen kann beispielsweise zwei im Wesentlichen parallele Hauptlängsträger aufweisen. Die beiden Hauptlängsträger können durch mehrere Querträger miteinander verbunden sein. Die mehreren Querträger können entlang einer Längsachse des Nutzfahrzeugs voneinander beabstandet sein. Alternativ kann der Fahrzeugrahmen 12 beispielsweise als ein Gitterrahmen ausgeführt sein, z. B. bei einer Ausführung des Nutzfahrzeugs als ein Lastkraftwagen oder ein Omnibus.

Das Kraftfahrzeug 10 ist bevorzugt elektrisch antreibbar. Beispielsweise kann das Kraftfahrzeug 10 mittels eines zentralen Elektroantriebs antreibbar sein. Der zentrale Elektroantrieb kann beispielsweise unterhalb des Fahrerhauses und/oder zwischen den beiden Hauptlängsträgern des Fahrzeugrahmens 12 angeordnet sein. Alternativ kann das Kraftfahrzeug 10 beispielsweise mittels mehrerer Elektroradnabenantriebe oder mehrerer radnaher Elektroantriebe angetrieben sein.

Das Kraftfahrzeug 10 weist eine Ladesteckdose 14 und eine bewegbare Trittstufe 16 auf.

An die Ladesteckdose 14 ist ein elektrisches Ladekabel zum Aufladen des Kraftfahrzeugs 10 anschließbar. Die Ladesteckdose 14 kann bezüglich einer Längsachse des Kraftfahrzeugs 10 auf im Wesentlicher gleicher Position wie die Trittstufe 16 angeordnet sein. Die Ladesteckdose 14 kann bezüglich einer Querachse des Kraftfahrzeugs 10 weiter innenliegend angeordnet sein als die Trittstufe 16.

Mittels der Trittstufe 16 kann das Kraftfahrzeug 10 bestiegen werden. Die Trittstufe 16 dient zugleich als eine Abdeckung für die Ladesteckdose 14. Die Trittstufe 16 kann zwischen einer Gebrauchsstellung und einer Nichtgebrauchsstellung bewegbar sein.

In der Gebrauchsstellung kann die Trittstufe 16 einen Zugang zu der Ladesteckdose 14 zum Anschließen des elektrischen Ladekabels freigeben. In der Gebrauchsstellung kann die Trittstufe 16 begehbar sein. In der Gebrauchsstellung kann die Trittstufe 16 zum Besteigen des Kraftfahrzeugs 10 genutzt werden. Die Trittstufe 16 kann in der Gebrauchsstellung im Wesentlichen horizontal ausgerichtet sein.

In der Nichtgebrauchsstellung kann die Trittstufe 16 die Ladesteckdose 14 abdecken, z. B. unzugänglich abdecken und/oder uneinsehbar abdecken. In der Nichtgebrauchsstellung kann die Trittstufe 16 einen Zugang zu der Ladesteckdose 14 zum Anschließen eines elektrischen Ladekabels blockieren. In der Nichtgebrauchsstellung ist die Trittstufe 16 vorzugsweise nicht begehbar. In der Nichtgebrauchsstellung kann die Trittstufe 16 bei bestimmungsgemäßem Gebrauch nicht zum Besteigen des Kraftfahrzeugs 10 genutzt werden. Die Trittstufe 16 kann in der Nichtgebrauchsstellung im Wesentlichen vertikal ausgerichtet sein.

Beispielsweise kann die Trittstufe 16 zwischen der Gebrauchsstellung und der Nichtgebrauchsstellung verschwenkt bzw. geklappt und/oder verschoben werden. Vorzugsweise kann die Trittstufe 16 aus der Nichtgebrauchsstellung in die Gebrauchsstellung ausgeklappt werden, bevorzugt nach unten. Vorzugsweise kann die Trittstufe 16 aus der Gebrauchsstellung in die Nichtgebrauchsstellung eingeklappt werden, bevorzugt nach oben. Beispielsweise kann eine Schwenkachse der Trittstufe 16 im Wesentlichen parallel zu einer Längsachse des Kraftfahrzeugs 10 sein.

Es ist möglich, dass die Trittstufe 16 abschließbar ist. Vorzugsweise kann die Trittstufe 16 in der Nichtgebrauchsstellung abschließbar sein. Beispielsweise kann die Trittstufe 16 ein Schloss aufweisen, mit dem die Trittstufe 16 abschließbar ist. Das Schloss kann beispielsweise von einer Unterseite der Trittstufe 16 her zugänglich sein. Im abgeschlossenen Zustand kann die Trittstufe 16 nicht aus der Nichtgebrauchsstellung bewegbar sein bzw. nicht in die Gebrauchsstellung bewegbar sein.

Die Trittstufe 16 kann vorzugsweise ein Blechbauteil sein. Bevorzugt weist die Trittstufe 16 eine profilierte Trittfläche auf, um beispielsweise ein Abrutschen von der Trittfläche zu verhindern.

Die Trittstufe 16 und die Ladesteckdose 14 können an einer Längsaußenseite des Kraftfahrzeugs 10 zwischen einer Vorderachse und einer Hinterachse des Kraftfahrzeugs 10 angeordnet sein. Vorzugsweise sind die Trittstufe 16 und die Ladesteckdose 14 auf einer Höhe mit der Vorderachse und der Hinterachse angeordnet.

Es ist möglich, dass die Trittstufe 16 und die Ladesteckdose 14 bezüglich einer Vorwärtsfahrtrichtung des Kraftfahrzeugs 10 vor der Vorderachse oder hinter der Hinterachse angeordnet sind, vorzugsweise an einer Längsaußenseite des Kraftfahrzeugs 10. Es ist auch möglich, dass die Trittstufe 16 und die Ladesteckdose 14 beispielsweise an einer Vorderseite des Kraftfahrzeugs 10 oder an einer Rückseite des Kraftfahrzeugs 10 angeordnet sind.

Das Kraftfahrzeug 10 kann ferner eine Arbeitsplattform 18, eine Traktionsbatterie 20, eine Seitenverkleidung 22, eine Crashstruktur 24, eine Trittstufe 26 und/oder mindestens eine weitere Komponente 28 aufweisen.

Die Arbeitsplattform 18 kann mittels der Trittstufe 16 erreichbar sein. Zum Besteigen der Arbeitsplattform 18 kann die Trittstufe 16 in die Gebrauchsstellung bewegt werden.

Die Arbeitsplattform 18 kann bezüglich einer Vorwärtsfahrtrichtung des Kraftfahrzeugs 10 hinter einem Fahrerhaus des Kraftfahrzeugs 10 angeordnet sein, vorzugsweise angrenzend an eine Rückwand des Fahrerhauses. Die Arbeitsplattform 18 kann oberhalb von dem Fahrzeugrahmen 12 angeordnet sein, zweckmäßig direkt oberhalb des Fahrzeugrahmens 12. Vorzugsweise kann die Arbeitsplattform 18 auf dem Fahrzeugrahmen 12 abgestützt sein. Die Arbeitsplattform 18 kann zwischen einer Vorderachse und einer Hinterachse des Kraftfahrzeugs 10 angeordnet sein. Die Arbeitsplattform 18 kann, vorzugsweise direkt, oberhalb von der Trittstufe 16, der Ladesteckdose 14, der Traktionsbatterie 20, der Seitenverkleidung 22 und/oder der Crashstruktur 24 angeordnet sein.

Bei Begehung der Arbeitsplattform 18 können beispielsweise fahrerhausrückseitige Anschlüsse des Kraftfahrzeugs 10 und/oder frontseitige Anschlüsse eines Anhängers oder Aufliegers des Kraftfahrzeugs 10 zugänglich sein. Die Arbeitsplattform 18 kann beispielsweise eine Rechteckform aufweisen. Die Arbeitsplattform 18 ist vorzugsweise horizontal ausgerichtet.

Es ist allerdings auch möglich, dass die Trittstufe 16 nicht zum Besteigen der Arbeitsplattform 18 angeordnet ist. Stattdessen können die Trittstufe 16 und die Ladesteckdose 14 an jeglicher anderen Position des Kraftfahrzeugs 10 zum Besteigen des Kraftfahrzeugs 10 angeordnet sein. Beispielsweise kann die Trittstufe 16 zum Besteigen eines Fahrerhauses des Kraftfahrzeugs 10 angeordnet sein. Alternativ kann die Trittstufe 16 beispielsweise zum Besteigen eines Aufbaus, z. B. eines Ladeaufbaus, oder eines Anhängers oder Aufliegers des Kraftfahrzeugs 10 angeordnet sein.

Die Traktionsbatterie 20 kann extern über ein an der Ladesteckdose 14 angeschlossenes elektrisches Ladekabel geladen werden. Die Traktionsbatterie 20 und die Ladesteckdose 14 können elektrisch miteinander verbunden sein, z. B. über ein Hochvolt-Bordnetz und/oder ein Bordladegerät des Kraftfahrzeugs 10.

Die Traktionsbatterie 20 kann verdeckt hinter der Seitenverkleidung 22 angeordnet sein. Beispielsweise kann die Traktionsbatterie 20 bezüglich einer Querachse des Kraftfahrzeugs 10 zwischen dem Fahrzeugrahmen 12 und der Seitenverkleidung 22 bzw. der Crashstruktur 24 angeordnet sein. Die Traktionsbatterie 20 kann an dem Fahrzeugrahmen 12 angebracht sein, vorzugsweise an einer Außenlängsseite eines der Hauptlängsträger des Fahrzeugrahmens 12. Die Seitenverkleidung 22 bzw. die Crashstruktur 24 kann an der Traktionsbatterie 20 getragen bzw. angebracht sein, vorzugsweise an einer (z. B. Längs-) Seitenfläche der Traktionsbatterie 20, die weg von dem Fahrzeugrahmen 12 bzw. nach außen gerichtet ist.

Die Traktionsbatterie 20 kann bezüglich einer Längsachse des Kraftfahrzeugs 10 neben der Ladesteckdose 14 angeordnet sein. Vorzugsweise kann die Traktionsbatterie 20 bezüglich einer Vorwärtsfahrtrichtung (z. B. direkt) hinter oder (z. B. direkt) vor der Ladesteckdose 14 angeordnet sein. Alternativ kann die Ladesteckdose 14 bezüglich einer Längsansicht des Kraftfahrzeugs 10 an einer Position angeordnet sein, an der auch ein Abschnitt der Traktionsbatterie 20 angeordnet ist. Bezüglich einer Querachse des Kraftfahrzeugs 10 kann die Traktionsbatterie 20 näher zum Fahrzeugrahmen 12 angeordnet sein als die Ladesteckdose 14. Die Seitenverkleidung 22 kann einen Ausschnitt, z. B. in Form einer Durchgangsöffnung, aufweisen. In bzw. an dem Ausschnitt können die Trittstufe 16 und die Ladesteckdose 14 angeordnet sein. In der Nichtgebrauchsstellung kann die Trittstufe 16 bezüglich der Seitenverkleidung 22 zurückversetzt oder im Wesentlich bündig mit der Seitenverkleidung 22 sein. In der Gebrauchsstellung kann die Trittstufe 16 über die Seitenverkleidung 22 hinaus überstehen bzw. aus dem Ausschnitt der Seitenverkleidung 22 herausstehen.

Die Seitenverkleidung 22 kann zwischen einer Vorderachse und einer Hinterachse des Kraftfahrzeugs 10 angeordnet sein. Die Seitenverkleidung 22 kann einen Abschnitt einer Längsseite (z. B. Fahrerlängsseite oder Beifahrerlängsseite) des Kraftfahrzeugs 10 verkleiden. Bevorzugt verkleidet die Seitenverkleidung 22 die Traktionsbatterie 20. Vorzugsweise verkleidet die Seitenverkleidung 22 im Wesentlichen einen gesamten Abschnitt der Längsseite des Kraftfahrzeugs 10 zwischen der Vorderachse und der Hinterachse. Beispielsweise ist die Seitenverkleidung als eine Seitenvollverkleidung ausgeführt.

Die Seitenverkleidung 22 kann bezüglich einer Vorwärtsfahrtrichtung des Kraftfahrzeugs 10 hinter einem Kotflügel für die Vorderachse und/oder vor einem Kotflügel für die Hinterachse angeordnet sein.

Die Seitenverkleidung 22 kann sich im Wesentlichen parallel zu einer Längsachse des Kraftfahrzeugs 10 erstrecken. Vorzugsweise ist die Seitenverkleidung 22 auf Höhe einer Vorderachse, einer Hinterachse und/oder des Fahrzeugrahmens 12 des Kraftfahrzeugs 10 angeordnet. Bevorzugt ist die Seitenverkleidung 22 plattenförmig. Vorteilhaft ist die Seitenverkleidung 22 vertikal ausgerichtet.

Vorzugsweise kann zwischen der Seitenverkleidung 22 und der Traktionsbatterie eine Trägerplatte z. B. in Form eines Trägerblechs angeordnet sein. Die Trittstufe 16 kann bewegbar, vorzugsweise klappbar, an der Trägerplatte angebracht sein. Die Trägerplatte kann beispielsweise an der Traktionsbatterie 20 und/oder an einem Kotflügelträger des Kraftfahrzeugs 10 angebracht sein.

Die Crashstruktur 24 kann einen Ausschnitt aufweisen. In oder an dem Ausschnitt können die Trittstufe 16 und die Ladesteckdose 14 angeordnet sein. Die Crashstruktur 24 kann dazu ausgebildet sein, sich bei einem Seitenaufprall auf die Seitenverkleidung 22 unter Energieabbau vorbestimmt plastisch zu verformen. Die Crashstruktur 24 kann die Traktionsbatterie 20 schützen. Die Crashstruktur 24 kann bezüglich einer Querachse des Kraftfahrzeugs 10 zwischen der Traktionsbatterie 20 und der Seitenverkleidung 22 angeordnet sein. Die Crashstruktur 24 kann als eine Crashbeplankung ausgeführt sein. Die Crashstruktur 24 ist vorzugsweise plattenförmig. Die Crashstruktur kann beispielsweise eine profilierte Form, wie Wabenstruktur oder Wellenprofil usw., aufweisen. Vorzugsweise kann sich die Crashstruktur 24 im Wesentlichen über eine gesamte Höhe und/oder Länge der Seitenverkleidung 22 erstrecken.

Die optionale weitere Trittstufe 26 kann beispielsweise oberhalb oder unterhalb der Trittstufe 16 angeordnet sein. Die Trittstufe 26 kann wie die Trittstufe 16 ausgebildet sein.

Die mindestens eine Komponente 28 kann beispielsweise eine Ladekontrollanzeige, einen Stromtrennschalter und/oder einen Ladesteckdose-Verriegelungsschalter aufweisen. Mittels der Ladekontrollanzeige kann beispielsweise angezeigt werden, ob geladen wird, ob nicht geladen wird, ob fertig geladen wurde und/oder wieviel bereits geladen wurde. Der Stromtrennschalter kann eine elektrische Verbindung zwischen der Ladesteckdose 14 und dem elektrischen Ladekabel trennen. Der Verriegelungsschalter kann ein an die Ladesteckdose 14 angeschlossenes elektrisches Ladekabel an der Ladesteckdose 14 verriegeln und/oder entriegeln.

Es ist möglich, dass die Ladekontrollanzeige, der Stromtrennschalter und/oder der Ladesteckdose-Verriegelungsschalter neben der Ladesteckdose 14 angeordnet ist. Die bewegbare Trittstufe 16 könnte somit ebenfalls als eine bewegbare Abdeckung für die Ladekontrollanzeige, den Stromtrennschalter und/oder den Ladesteckdose-Verriegelungsschalter dienen, wie ausführlich für die Ladesteckdose 14 beschrieben wurde.

Es ist auch möglich, dass die Trittstufe 26 als eine bewegbare Abdeckung für die Ladekontrollanzeige, den Stromtrennschalter und/oder den Ladesteckdose-Verriegelungsschalter dient, wie analog bereits für die Trittstufe 16 und die Ladesteckdose 14 ausführlich beschrieben wurde.

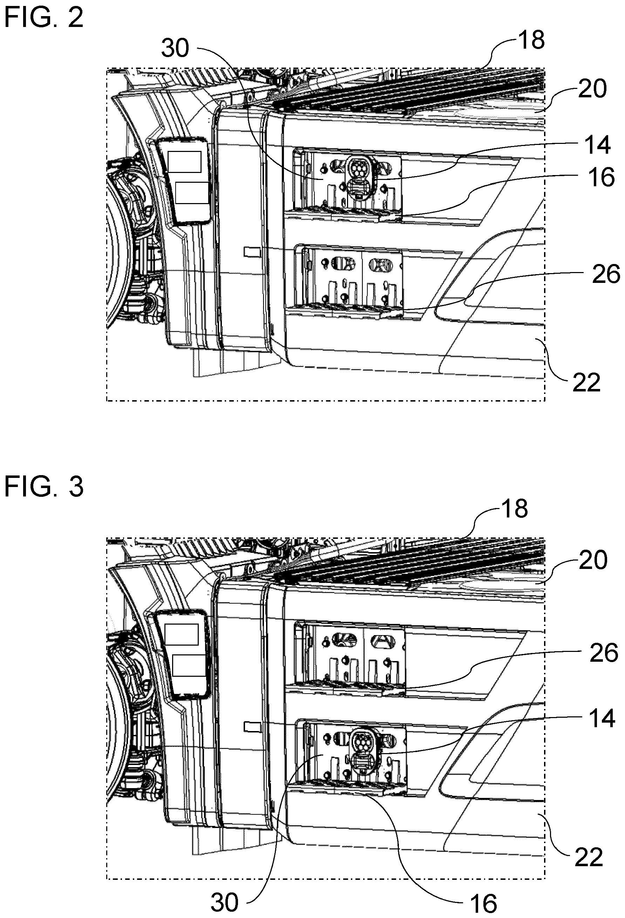

Die Figuren 2 bis 5 zeigen unterschiedliche beispielhafte Anordnungen der Ladesteckdose 14 und der Trittstufe 16. Die Trittstufe 16 ist jeweils im ausgeklappten Zustand bzw. in der Gebrauchsstellung dargestellt. In allen Figuren erkennt man zudem die bereits mit Bezug zur Figur 1 beschriebene Trägerplatte, die in den Figuren 2 bis 5 mit dem Bezugszeichen 30 gekennzeichnet ist. In den Beispielen der Figuren 2 bis 5 sind der Einfachheit halber keine der möglichen weiteren Komponenten 28 dargestellt, auch wenn deren Anordnung im Bereich der Trittstufe 16 und/oder der Trittstufe 26 möglich wäre. Es ist auch möglich, dass keine Trittstufe 26 umfasst ist.

In der Figur 2 ist die Trittstufe 16 die obere Trittstufe. In der Figur 3 ist die Trittstufe 16 die untere Trittstufe. Wie dargestellt ist, kann die Ladesteckdose 14 parallel zu einer Querachse des Kraftfahrzeugs 10 und parallel zu einer Querachse der Trittstufe 16 (in der Gebrauchsstellung) ausgerichtet. Die Ladesteckdose 14 kann horizontal ausgerichtet sein, wenn das Kraftfahrzeug 10 horizontal ausgerichtet ist.

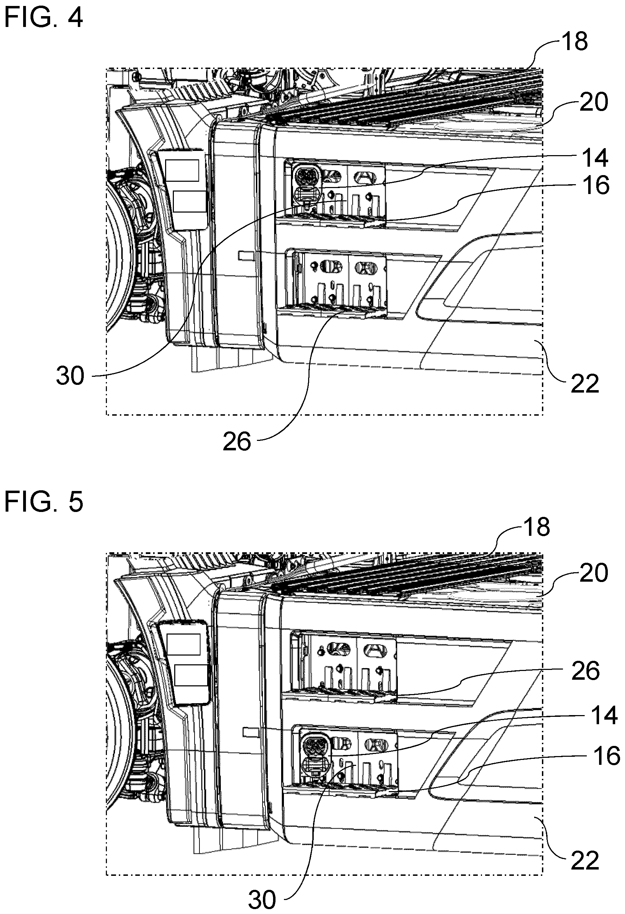

In der Figur 4 ist die Trittstufe 16 die obere Trittstufe. In der Figur 5 ist die Trittstufe 16 die untere Trittstufe. Wie dargestellt ist, kann die Ladesteckdose 14 angeschrägt zu einer Querachse und angeschrägt zu einer Längsachse des Kraftfahrzeugs 10 ausgerichtet sein. Die Ladesteckdose 14 kann angeschrägt zu einer Querachse der Trittstufe 16 (in der Gebrauchsstellung) und angeschrägt zu einer Längsachse der Trittstufe 16 (in der Gebrauchsstellung) ausgerichtet sein. Die Ladesteckdose 14 kann horizontal ausgerichtet sein, wenn das Kraftfahrzeug 10 horizontal ausgerichtet ist.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Ladesteckdose und/oder der Trittstufe des unabhängigen Anspruchs 1 offenbart.

### Bezugszeichenliste

- 10: Kraftfahrzeug
- 12: Fahrzeugrahmen
- 14: Ladesteckdose
- 16: Trittstufe
- 18: Arbeitsplattform
- 20: Traktionsbatterie
- 22: Seitenverkleidung
- 24: Crashstruktur
- 26: Trittstufe
- 28: Weitere Komponente
- 30: Trägerplatte

## Patentansprüche

1. Vorrichtung zum Laden eines Kraftfahrzeugs (10), vorzugsweise eines Nutzfahrzeugs, aufweisend:
eine Ladesteckdose (14) zum Anschließen eines elektrischen Ladekabels; und
eine bewegbare Trittstufe (16) zum Besteigen des Kraftfahrzeugs (10), wobei die Trittstufe (16) als eine bewegbare Abdeckung der Ladesteckdose (14) angeordnet ist.

2. Vorrichtung nach Anspruch 1, wobei:
die Trittstufe (16) zwischen einer, vorzugsweise horizontal ausgerichteten, Gebrauchsstellung und einer, vorzugsweise vertikal ausgerichteten, Nichtgebrauchsstellung bewegbar ist;
die Trittstufe (16) in der Nichtgebrauchsstellung die Ladesteckdose (14) abdeckt; und
die Trittstufe (16) in der Gebrauchsstellung einen Zugang zu der Ladesteckdose (14) zum Anschließen des elektrischen Ladekabels freigibt.

3. Vorrichtung nach Anspruch 1 oder Anspruch 2, wobei:
die Trittstufe (16) klappbar ist.

4. Vorrichtung nach Anspruch 3, wobei:
die Trittstufe (16) in einem eingeklappten Zustand die Ladesteckdose (14) abdeckt; und/oder
die Trittstufe (16) in einem ausgeklappten Zustand einen Zugang zu der Ladesteckdose (14) zum Anschließen des elektrischen Ladekabels freigibt, vorzugsweise in einem Bereich oberhalb der ausgeklappten Trittstufe (16).

5. Vorrichtung nach einem der vorherigen Ansprüche, wobei:
die Trittstufe (16) abschließbar ist, vorzugsweise in einer Nichtgebrauchsstellung der Trittstufe (16).

6. Vorrichtung nach einem der vorherigen Ansprüche, wobei die Trittstufe (16) in einer Gebrauchsstellung der Trittstufe (16) eine Längsachse und eine Querachse aufweist und:
die Ladesteckdose (14) parallel zu der Querachse ausgerichtet ist, oder
die Ladesteckdose (14) angeschrägt zu der Querachse und angeschrägt zu der Längsachse ausgerichtet ist.

7. Vorrichtung nach einem der vorherigen Ansprüche, ferner aufweisend mindestens eine Komponente (28) von:
eine Ladekontrollanzeige;
einen Stromtrennschalter; und
einen Ladesteckdose-Verriegelungsschalter.

8. Vorrichtung nach Anspruch 7, wobei:
die bewegbare Trittstufe (16) als eine bewegbare Abdeckung der mindestens einen Komponente (28) angeordnet ist; oder
die Vorrichtung eine weitere bewegbare Trittstufe (26) aufweist und die weitere bewegbare Trittstufe (26) als eine bewegbare Abdeckung der mindestens einen Komponente (28) angeordnet ist.

9. Vorrichtung nach einem der vorherigen Ansprüche, ferner aufweisend:
eine Seitenverkleidung (22), vorzugsweise Seitenvollverkleidung, die einen Ausschnitt aufweist, in dem oder an dem die Trittstufe (16) und die Ladesteckdose (14) angeordnet sind.

10. Vorrichtung nach Anspruch 9, ferner aufweisend:
eine Traktionsbatterie (20),
wobei die Traktionsbatterie (20) neben der Ladesteckdose (14) und/oder in einer Blickrichtung auf eine Außenseite der Seitenverkleidung, vorzugsweise geschützt und/oder verdeckt, hinter der Seitenverkleidung (22) angeordnet ist.

11. Vorrichtung nach Anspruch 10, ferner aufweisend:
eine Trägerplatte (30), die zwischen der Traktionsbatterie (20) und der Seitenverkleidung (22) angeordnet ist,
wobei die Trittstufe (16) bewegbar, vorzugsweise klappbar, an der Trägerplatte (30) angebracht ist.

12. Vorrichtung nach einem der vorherigen Ansprüche, ferner aufweisend:
eine Crashstruktur (24), die dazu ausgebildet ist, sich bei einem Aufprall unter Energieabbau vorbestimmt zu verformen,
wobei die Trittstufe (16) und die Ladesteckdose (14) in oder an einem Ausschnitt der Crashstruktur (24) angeordnet sind.

13. Kraftfahrzeug (10), vorzugsweise Nutzfahrzeug, bevorzugt Lastkraftwagen, wobei das Kraftfahrzeug (10) aufweist:
eine Vorrichtung nach einem der vorherigen Ansprüche.

14. Kraftfahrzeug (10) nach Anspruch 13, ferner aufweisend:
eine Vorderachse; und
eine Hinterachse;
wobei die Trittstufe (16) und die Ladesteckdose (14) an einer Längsaußenseite des Kraftfahrzeugs (10) zwischen der Vorderachse und der Hinterachse angeordnet sind, vorzugsweise auf einer Höhe mit der Vorderachse und der Hinterachse.

15. Kraftfahrzeug (10) nach Anspruch 13 oder Anspruch 14, ferner aufweisend:
eine Arbeitsplattform (18),
wobei die Trittstufe (16) zum Besteigen der Arbeitsplattform (18) angeordnet ist, wobei vorzugsweise:
die Arbeitsplattform (18) bezüglich einer Vorwärtsfahrtrichtung des Kraftfahrzeugs (10) hinter einem Fahrerhaus des Kraftfahrzeugs (10) angeordnet ist; und/oder
die Arbeitsplattform (18) oberhalb von einem Fahrzeugrahmen (12) des Kraftfahrzeugs (10) angeordnet ist; und/oder
mittels der Arbeitsplattform (18) mindestens ein fahrerhausrückseitiger Anschluss des Kraftfahrzeugs (10) und/oder mindestens ein frontseitiger Anschluss eines Anhängers oder Aufliegers des Kraftfahrzeugs (10) zugänglich ist.
